# EUROPEAN PATENT APPLICATION

(11) **EP 1 332 667 A1**
(43) Date of publication of application: **06.08.2003**
(21) Application number: 02075477.6
(22) Date of filing: 05.02.2002
(51) Int. Cl.: A01J 5/007

(54) **A method of and a device for performing an animal related action on an animal**

(71) Applicant: Lely Enterprises AG, 6300 ZUG (CH)
(72) Inventor: van de Lely, Alexander, 3065 NA Rotterdam (NL); Theelen, Antoon Peter André, 3142 CM Maassluis (NL)
(74) Representative: Corten, Maurice Jean F.M.

(57) **Abstract**

The invention refers to a method of and a device for performing an animal related action on an animal. The device comprises a machine arranged to permit milking of the animal according to a process being determined by a number of adjustable parameters defining the nature of the process. The value of a variable related to one or more animals is determined for said animal by determining means. The animal related action is performed on the animal during a current animal related action by means of the machine, wherein at least one of said parameters is adjusted in response to said determined value by control means.

## Description

The present invention relates to a method of performing an animal related action on a living animal.

Furthermore, the invention refers to a device for performing an animal related action on a living animal.

Such a method and device are known from WO 01/37646. Herein at least one of said parameters of a milking process is adjusted in connection with a value determined on the basis of the time period from at least one first milking operation to a following second milking operation. Although such a method and device in some instances work satisfactorily improvement is possible.

According to the invention this is achieved by a method of performing an animal related action on a living animal, said animal related action being determined by a number of adjustable parameters defining the nature of the animal related action, the method comprising the steps of determining for said animal a value of a variable related to one or more animals; adjusting in connection with a current animal related action on said animal at least one of said parameters in response to said determined value; and performing the animal related action. According to the invention this is furthermore achieved by a device for performing an animal related action on a living animal, comprising a machine arranged to perform the animal related action on said animal according to a process being determined by a number of adjustable parameters defining the nature of the process, said device comprising determining means for determining for said animal a value of a variable related to one or more animals, and control means arranged to adjust at least one of said parameters of the machine in connection with a current animal related action in response to said determined value. The invention is based on the insight that since each animal has its own biological clock the adjustment of at least one of the parameters based on a time period defined by a (mechanical) clock can lead to problems. Thus according to the invention it is not the time period which is used to adjust a parameter of a process, but an animal related variable which is not defined by a (mechanical) clock. Not only can the animal related variable be a variable pertaining to the same animal but in addition it has appeared that an improvement can be obtained even if the variable pertains to one or more other (thus a group of) animals. In this way the adjustment of the parameters can be done in a more animal friendly way.

In a preferred embodiment the value of the variable related to one or more animals is determined from at least one first previous animal related action to the current animal related action, which previous action may be the immediately preceding animal related action. By the expression "nature of the process" is meant the characteristic performance of the process in a broad sense. In case the animal related action is milking of the animal, the nature can be defined by a number of parameters including the time period of the milking process, the time period and/or the intensity of the preceding stimulation cleaning of the teats, other possible pretreatments of the teats such as cleaning, the milking vacuum level, the upper and lower levels of the pulsation pressure in the pulsation chamber, the pulsation frequency, the pulsation ratio, etc. With milking nature also the aggressiveness or intensity of the performance of the milking process is meant.

According to a preferred embodiment of the invention, the adjustment of at least one of said parameters is such that the current animal related action is performed in a less intensive manner when the animal related variable has a relative small value and in a more intensive manner when the animal related variable has a relative large value. The advantage of such a performance of the current animal related action is in the case of a milking process that a more gentle treatment of the teats is achieved, which reduces the risks of injuries on the teats and which may result in a higher milk yield.

According to a further embodiment of the invention, the adjustment is performed in an automatic manner. Moreover, the determining of said value may also be performed in an automatic manner. It is considered that the method according to the present invention is suitable for being performed in such an automatic manner, by utilising a database storing facts and parameters about the individual animals and offering the possibility to store the value of said variable, and by utilising control means for the adjustment of different machine parameters. In addition in case of a milking process time points for different measures, such as terminating the stimulation period or initiating removal of the teat cups can be stored. Consequently, said adjustable parameters may include at least one of the milking vacuum level, the pulsation frequency, the duration of the preceding teat stimulation, the pulsation ratio, and the point of time for the removal of the teat cups.

According to a further embodiment of the invention, the adjustment of the milking vacuum level is such that the milking vacuum level during the current milking operation is relatively low when the animal related variable has a relative small value and relatively high when the animal related variable has a relative large value. Consequently, the milking intensity may be reduced by reducing the milking vacuum level (i.e. a relatively high pressure) during the current milking operation when the animal related variable has a relative small value and by increasing the milking vacuum level (i.e. a relatively low pressure) when the animal related variable has a relative large value.

According to a further embodiment of the invention, the adjustment of the pulsation frequency is such that the pulsation frequency during the current milking operation is relatively low when the animal related variable has a relative small value and relatively high when the animal related variable has a relative large value. Consequently, a high milking intensity is obtained by a high pulsation frequency and a low milking intensity is obtained by a low pulsation frequency.

According to a further embodiment of the invention, the adjustment of the preceding teat stimulation is such that the stimulation period during the current milking operation is relatively long when the animal related variable has a relative small value and relatively short when the animal related variable has a relative large value. When the animal related variable, for example between subsequent milking operations, has a relative small value, a longer stimulation period results to obtain milk let down.

According to a further embodiment of the invention, the adjustment of the pulsation ratio is such that the pulsation ratio during the current milking operation is relatively low when the animal related variable has a relative small value and relatively high when the animal related variable has a relative large value. Consequently, a low milking intensity is obtained by a low pulsation ratio and a high milking intensity is obtained by a relatively high pulsation ratio.

According to a further embodiment of the invention, the adjustment of the time period for the removal of the teat cups is such that the teat cups are removed at a relatively early point of time when the animal related variable has a relative small value and at a relatively late point of time when the animal related variable has a relative large value.

According to a further embodiment of the invention, the first previous animal related action is the animal related action immediately preceding the current animal related action. Consequently, the value of the animal related variable is based on the time period calculated from the immediately preceding animal related action, and thus different values can be obtained although the time period is the same.

According to an embodiment the animal related variable is defined by the number of other animals that have been subjected to the animal related action.

According to an embodiment the animal related action yields an animal related product.

According to an embodiment the animal related variable is defined by the total amount of product that has been yielded.

According to an embodiment the product is milk or milk fat or milk protein or the like.

According to an embodiment the animal related variable is defined by the degree of filling of the udder of the animal.

According to an embodiment the animal related variable is the length of the teat, or the temperature of the teat, or the volume of the teat, or the flexibility of the teat, or the colour of the teat, or the degree of lengthening of the teat during milking.

Preferably the milking is performed by means of a teat cup, so that measuring elements for measuring the length of the teat, or the temperature of the teat, or the volume of the teat, or the flexibility of the teat, or the colour of the teat, or the degree of lengthening of the teat during milking can be incorporated in the teat cup.

According to an embodiment the animal related variable is defined by the weight of the animal.

According to an embodiment the animal related variable is defined by the number of movements of said animal or a group of animals.

According to an embodiment the animal related variable is defined by the body score of the one or more animals.

According to an embodiment the animal related variable is defined by the fat content of the one or more animals.

The present invention is now to be disclosed more closely by means of the description of an embodiment and with reference to the drawing attached, in which

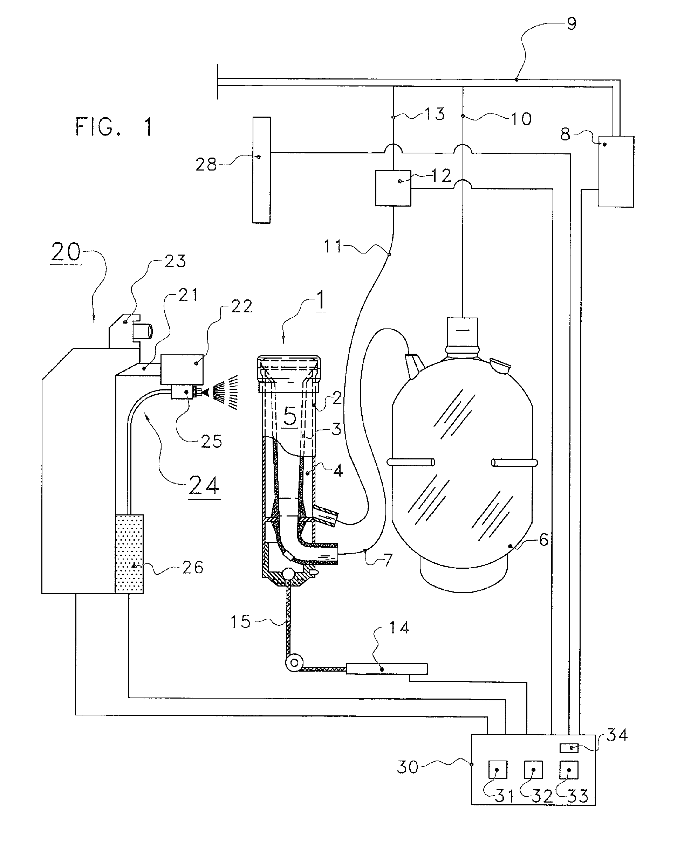

Figure 1 discloses schematically a device for milking an animal according to the present invention.

Figure 1 discloses schematically a milking device for milking an animal as an example for a machine for performing an animal related action. The milking device comprises a number of teat cups 1. The device referred to in this embodiment is adapted for milking of cows and therefore includes four teat cups 1, although only one teat cup 1 is disclosed in Figure 1. Milking devices for other animals such as goats or buffaloes may include only two teat cups 1. The teat cup includes a shell 2 and a teat cup liner 3. A pulsation chamber 4 is formed between the shell 2 and the teat cup liner 3. The teat cup liner 3 encloses an inner space 5 adapted to receive a teat of the animal to be milked. The inner space 5 is connected to a milk-receiving member 6 via a milk conduit 7. The milk is conveyed from the teat to the milk-receiving member 6 by means of a milking vacuum produced by a vacuum pump 8 and transferred to the milk conduit 7 via a main vacuum conduit 9 and a milk vacuum conduit 10.

The pulsation chamber 4 is subjected to a pulsating pressure via a pulse conduit 11 and a pulsator 12 driven by a vacuum supplied to the pulsator from the vacuum pump 8 via the main vacuum conduit 9 and a pulse vacuum conduit 13. Due to the pulsating pressure, the teat cup liner 3 will move in cyclically, alternating movement between a closed position with regard to the inner space 5 and an open position with regard to the inner space. The ratio of the time that the teat cup liner 3 is more than half open to the time it is less than half open is defined as the pulsation ratio.

Furthermore, the device comprises a remover member 14 for the removal of the teat cups 1 from the teat of the animal. The remover member 14 comprises a pulling cylinder acting on a flexible cord 15 connected to the teat cup 1.

The milking device is arranged to permit automatic attachment of the teat cups 1 to the teats of the animal. Thereby, the milking device comprises an automatic handling equipment 20 including a robot arm 21 having a gripping member 22 arranged to grip the teat cup 1 from a teat cup magazine (not disclosed) and move the teat cup 1 towards the teat of the animal to be milked and thereafter attach the teat cup 1 to the teat. A video camera 23 or any similar teat identification member is mounted on the robot arm 21 in order to detect and sense the position of the teat.

Moreover, the milking device includes a spraying member 24, comprising a nozzle 25 mounted to the robot arm 21 and arranged to direct a jet of liquid towards the teat in order to clean the teat and thereby stimulate the teat. The nozzle 25 is connected to a liquid source 26 schematically disclosed. It is to be noted that the spraying member 24 disclosed in this embodiment merely is an example of a device for stimulating the teat to the milk let down. It is to be understood that the invention may incorporate other stimulating means, for example stimulating by means of the teat cup 1 attached to the teat, wherein the teat cup liner and the teat is subjected to a pulsation at a relatively high frequency, or a mechanical stimulating member.

Furthermore, the milking device includes an animal identification member 28, which is provided adjacent to the position at which the animal is milked. The animal identification member 28 is arranged to identify the animal to be milked, for instance by means of a transponder carried by the animal.

Different components of the milking device are controlled by a control unit 30. These components include a vacuum pump 8, the pulsator 12, the remover member 14, the automatic handling equipment 20, the spraying member 24, and the identification member 28. Although only one control unit 30 is disclosed in this embodiment, it is to be noted that the milking device may include several control units, for instance separate control units for the different components. The control unit 30 includes a processing member 31, a time-measuring member 32 and a storing member 33. By means of the time-measuring member 32, the point of time for different events may be detected. Such events include for instance the application of the teat cup 1 to a teat, the removal of the teat cup 1 from the teat, the beginning of the milk flow to the milk-receiving member 6 via the milk conduit 7, the end of the milk flow, beginning of the stimulation of a teat by means of the spraying member 24, the end of the stimulation period etc. The different points of time are stored in the storing member 33. In addition an animal related variable-measuring member 34 is present which measures an animal related variable, which may be processed by the processing member 31 in order to determine the animal related variable, for example between two subsequent milking operations.

By means of the control unit 30, different parameters defining the nature and/or intensity of the milking process and related to the different components such as the vacuum pump 8, the pulsator 12, the remover member 14, the automatic handling equipment 20 and the spraying member 24, may be adjusted.

In accordance with the present invention, these parameters may be adjusted in response to the animal related variable, e.g. determined between two subsequent milking operations, defined by the animal related variable-measuring member 34.

For example, the point of time of the removal of the teat cup 1 after a first milking operation of a cow identified by the identification member 28 may be detected by the time-measuring member 32 and stored in the storing member 33. When the cow in question arrives in the milking stall once again for the subsequent second milking operation, she is identified by the identification member 28 and the point of time of the application of the teat cup 1 to the teat, for instance, may be detected by the time-measuring member 32. By means of these two detected points of time the animal related variable-measuring member 34 may determine the animal related variable between the two subsequent milking operations, i.e. in the time-period measured. Thereafter, the intensity of the subsequent second milking operation (i.e. the current milking operation to be performed on the animal) may be controlled by adjusting one or several of said parameters in response to the value of said animal related variable. The adjustment of said parameters could for example be such that the second milking operation is performed in a less intensive manner when the animal related variable has a relative small value and in a more intensive manner when the animal related variable has a relative large value.

The parameters defined above may be adjusted in a number of different ways in order to control the milking nature and/or intensity. For instance, the vacuum pump 8 may be controlled in order to increase or decrease the milking vacuum level acting on the teat to extract milk from the udder of the animal. A relatively high milking vacuum level corresponds to a relatively high milking intensity and a relatively lower milking vacuum level corresponds to a lower milking intensity.

Furthermore, the control unit 30 may be arranged to control the pulsator 12 in order to adjust the pulsation frequency, wherein a high frequency corresponds to a high milking intensity and a lower pulsation frequency corresponds to a lower milking intensity. The control unit 30 may also be arranged to control the pulsator 12 in such a manner that the pulsation ratio is adjusted, wherein a higher pulsation ratio, i.e. a relatively long open phase of the teat cup liner 3, corresponds to a high milking intensity and a lower pulsation ratio corresponds to a lower milking intensity.

Furthermore, the control unit 30 may be arranged to control the remover member 14, and more exactly the point of time for the removal of the teat cup 1 from the teat. In case of a relatively low milking intensity, the teat cup 1 may be removed at an earlier point of time than in case of a higher milking intensity.

The milking intensity may also be controlled by adjusting the time period or the efficiency of the stimulation of the teat prior to the current milking. A more efficient stimulation corresponds to a higher milking intensity than a less efficient stimulation. Moreover, the milking intensity may be raised by increasing the time period for the stimulation.

It is to be noted that the milking intensity may be controlled by other parameters than the parameters mentioned above. The parameters mentioned in the application are to be regarded as examples. It is also to be noted that the milking nature and/or intensity may be controlled by adjusting not only one but a combination of different parameters. The milking intensity may not only be controlled with respect to the animal related variable between two subsequent milking operations, but also with respect to, for instance, an average animal related variable.

In practice it has appeared that a more than satisfactory functioning of the device can be obtained when the animal related variable is defined by the number of other animals that have been subjected to the animal related action. In this case the animal related variable-measuring member 34 can be a counter, counting the number of animals on which the animal related action has been performed.

In case the animal related action yields an animal related product, such as milk or milk fat or milk protein or the like, it is beneficial to use the total amount of product that has been yielded as the animal related variable. In addition or alternatively the animal related variable could in this case be defined by the degree of filling of the udder of the animal. Such a degree can for example be measured by means of ultrasound. In addition or alternatively the animal related variable could be defined by the weight of the animal. In addition the animal related variable could be defined by the number of movements of said animal or a group of animals, which can be measured by known movement detectors. In addition the animal related variable could be defined by the body score of the one or more other animals, in particular said animal, which for example can be measured by known body score measuring devices. In addition or alternatively the animal related variable could be defined by the fat content of the said animal or of one or more other animals. In addition or alternatively the animal related variable is the length of the teat (for example to be measured by a camera or a laser grid), or the temperature of the teat (for example to be measured by a thermometer), or the volume of the teat (for example to be measured by image processing or placing the teat into a liquid and measuring the displacement of liquid), or the flexibility of the teat (for example to be measured by pressing or bending the teat and measuring the relaxation), or the colour of the teat, or the degree of lengthening of the teat during milking.

## Claims

1. A method of performing an animal related action on a living animal, said animal related action being determined by a number of adjustable parameters defining the nature of the animal related action, the method comprising the steps of:
determining for said animal a value of a variable related to one or more animals;
adjusting in connection with a current animal related action on said animal at least one of said parameters in response to said determined value; and
performing the current animal related action.

2. A method according to claim 1, wherein the value of a variable related to one or more animals is determined from at least one first previous animal related action to the current animal related action.

3. A method according to claim 1 or 2, wherein the value of a variable related to one or more animals is a variable related to said animal.

4. A method according to claim 1 or 2, wherein the value of a variable related to one or more animals is a variable related to a group of animals.

5. A method according to any one of the preceding claims, wherein the animal related action is milking by means of a milking machine according to a milking process being determined by a number of adjustable parameters defining the nature of the milking process.

6. A method according to any one of the preceding claims, wherein the adjustment of at least one of said parameters is such that the current animal related action is performed in a less intensive manner when the animal related variable has a relative small value and in a more intensive manner when the animal related variable has a relative large value.

7. A method according to any one of the preceding claims, wherein the adjustment is performed in an automatic manner.

8. A method according to any one of the preceding claims, wherein the determining of said value is performed in an automatic manner.

9. A method according to claim 5, wherein said adjustable parameters include at least one of the milking vacuum level, the pulsation frequency, the duration and/or intensity of the preceding teat stimulation, the duration and/or intensity of the teat cleaning, the pulsation ratio, and the point of time for the removal of the teat cups.

10. A method according to claim 9, wherein the adjustment of the milking vacuum level is such that the milking vacuum level during the current milking operation is relatively low when the animal related variable has a relative small value and relatively high when the animal related variable has a relative large value.

11. A method according to claim 9, wherein the adjustment of the pulsation frequency is such that the pulsation frequency during the current milking operation is relatively low when the animal related variable has a relative small value and relatively high when the animal related variable has a relatively large value.

12. A method according to claim 9, wherein the adjustment of the preceding teat stimulation is such that the stimulation period during the current milking operation is relatively long when the animal related variable has a relative small value and relatively short when the animal related variable has a relative large value.

13. A method according to claim 9, wherein the adjustment of the pulsation ratio is such that the pulsation ratio during the current milking operation is relatively low when the animal related variable has a relative small value and relatively high when the animal related variable has a relatively large value.

14. A method according to claim 9, wherein the adjustment of the time period for the removal of the teat cups is such that the teat cups are removed at a relatively early point of time when the animal related variable has a relative small value and at a relatively late point of time when the animal related variable has a relative large value.

15. A method according to any one of the preceding claims, wherein the first previous animal related action is the animal related action immediately preceding the current animal related action.

16. A method according to any one of the preceding claims, wherein the animal related variable is defined by the number of other animals that have been subjected to the animal related action.

17. A method according to any one of the preceding claims, wherein the animal related action yields an animal related product.

18. A method according to claim 15 and 17, wherein the animal related variable is defined by the total amount of product that has been yielded.

19. A method according to claim 17 or 18, wherein the product is milk or milk fat or milk protein or the like.

20. A method according to claim 19, wherein the animal related variable is defined by the degree of filling of the udder of said animal.

21. A method according to claim 19, wherein the animal related variable is the length of the teat, or the temperature of the teat or the volume of the teat, or the flexibility of the teat, or the colour of the teat, or the degree of lengthening of the teat during milking.

22. A method according to claim 21, wherein the milking is performed by means of a teat cup.

23. A method according to any one of the preceding claims, wherein the animal related variable is defined by the weight of said animal.

24. A method according to any one of the preceding claims, wherein the animal related variable is defined by the number of movements of said animal.

25. A method according to any one of the preceding claims, wherein the animal related variable is defined by the body score of said animal or of said one or more other animals.

26. A method according to any one of the preceding claims, wherein the animal related variable is defined by the fat content of said animal or of said one or more other animals.

27. A device for performing an animal related action on a living animal, comprising:
a machine arranged to perform the animal related action on said animal according to a process being determined by a number of adjustable parameters defining the nature of the process, said device comprising:
determining means (31, 32) for determining for said animal a value of a variable related to one or more animals, and
control means (30, 31) arranged to adjust at least one of said parameters of the machine in connection with a current animal related action in response to said determined value.

28. A device according to claim 27, wherein the machine for performing an animal related action is a milking machine for milking an animal, comprising:
a milking machine arranged to permit milking of the animal according to a milking process being determined by a number of adjustable parameters defining the nature of the milking process.

29. A device according to claim 27 or 28, wherein the control means (30, 31) is arranged to adjust at least one of said parameters in an automatic manner.

30. A device according to any one of claims 28 and 29, wherein the determining means (31, 32) is arranged to determine said value in an automatic manner.

31. A device according to any one of claims 28 to 30, comprising storing means (33) arranged to store the value of said variable.
